# EUROPÄISCHE PATENTSCHRIFT

(11) **EP 4 158 233 B1**
(45) Veröffentlichungstag und Bekanntmachung des Hinweises auf die Patenterteilung: **26.06.2024**
(21) Anmeldenummer: 21732167.8
(22) Anmeldetag: 27.05.2021
(51) Int. Cl.: F16L 37/088

(54) **STECKVERBINDER SOWIE DARAUS GEBILDETE STECKERBAUGRUPPE**
PLUG CONNECTOR AND PLUG ASSEMBLY FORMED THEREFROM
FICHE DE CONNEXION ET ENSEMBLE FICHE FORMÉ À PARTIR DE CELLE-CI

(30) Priorität: 27.05.2020 AT 504602020
(43) Veröffentlichungstag der Anmeldung: 05.04.2023
(73) Patentinhaber: Henn GmbH & Co KG., 6850 Dornbirn (AT)
(72) Erfinder: HALBEISEN, Lukas, 6837 Weiler (AT); HARTMANN, Harald, 6850 Dornbirn (AT)
(74) Vertreter: Burger, Hannes
(86) Internationale Anmeldenummer: PCT/AT2021/060180
(87) Internationale Veröffentlichungsnummer: WO 2021/237260

(56) Entgegenhaltungen:
- EP-B1- 2 542 813
- WO-A1-2018/145139
- US-A1- 2008 084 061

## Beschreibung

Die Erfindung betrifft einen ersten Steckverbinder zur Verbindung von Leitungen für flüssige und/oder gasförmige Medien mit einem zweiten Steckverbinder. Weiters betrifft die Erfindung auch noch eine Steckerbaugruppe umfassend einen ersten und zweiten Steckverbinder. Ein gattungsgemäß ausgebildeter Steckverbinder zur Bildung einer Steckerbaugruppe unter Verwendung eines zweiten Steckverbinders ist aus der US 2008/0084061 A1 bekannt geworden.

In dem Steckverbinder bekannt aus der EP 3 584 489 A1 sind ein rohrförmiger, aus einem Kunststoffmaterial gebildeter Steckverbinderkörper und eine aus einem metallischen Werkstoff gebildete Aufnahmehülse vorgesehen. Innerhalb der Aufnahmehülse ist zur Bildung einer Aufnahmenut für ein darin aufzunehmendes Dichtelement ein eigenes und zusätzliches Halteelement aus einem Kunststoffmaterial angeordnet. Eine erste Nutseitenfläche sowie die Nutgrundfläche der Aufnahmenut werden vom Steckverbinderkörper gebildet. Die zweite Nutseitenfläche der Aufnahmenut wird von einer Stirnfläche des zusätzlichen Halteelements gebildet. Der Steckverbinderkörper, die Aufnahmehülse und das innerhalb der Aufnahmehülse befindliche Halteelement definieren einen Aufnahmeraum für den zweiten Steckverbinder. Nachteilig dabei ist, dass ein eigenes zusätzliches Halteelement hergestellt werden muss und auch bei der Montage des Steckverbinders zumindest ein zusätzlicher Arbeitsschritt erforderlich ist.

Aufgabe der vorliegenden Erfindung war es, die Nachteile des Standes der Technik zu überwinden und einen ersten Steckverbinder zur Verfügung zu stellen, welcher in seiner Herstellung einfacher und kostengünstiger ist. Weiters soll auch noch eine Steckerbaugruppe umfassend einen ersten und zweiten Steckverbinder geschaffen werden.

Diese Aufgabe wird durch einen Steckverbinder sowie einen diesen Steckverbinder umfassende Steckerbaugruppe gemäß den Ansprüchen gelöst.

Der erfindungsgemäße Steckverbinder dient zur Verbindung von Leitungen für flüssige und/oder gasförmige Medien mit einem zweiten Steckverbinder und zur Bildung einer Steckerbaugruppe. Der erste Steckverbinder umfasst
- einen Steckverbinderkörper, welcher Steckverbinderkörper rohrförmig sowie aus einem Kunststoffwerkstoff ausgebildet ist und sich zwischen einem ersten Endbereich und einem zweiten Endbereich eine Längsachse erstreckt,
- eine Aufnahmehülse, welche Aufnahmehülse aus einem metallischen Werkstoff gebildet ist und im ersten Endbereich des Steckverbinderkörpers außenseitig angeordnet und am Steckverbinderkörper feststehend gehalten ist, und die Aufnahmehülse den Steckverbinderkörper auf die vom zweiten Endbereich abgewendetet Seite überragt, wobei ein weiblicher Aufnahmeraum gemeinsam vom Steckverbinderkörper und der Aufnahmehülse definiert ist, und wobei zumindest der Aufnahmeraum hohlzylinderförmig ausgebildet ist,
- ein Dichtelement, welches Dichtelement ringförmig ausgebildet und in dem vom Steckverbinderkörper und der Aufnahmehülse definierten Aufnahmeraum angeordnet und in einer Aufnahmenut mit einer ersten Nutseitenfläche, einer zweiten Nutseitenfläche und einer Nutgrundfläche in Richtung der Längsachse positioniert gehalten ist,
- wobei die erste Nutseitenfläche und zumindest ein Teilabschnitt der Nutgrundfläche der Aufnahmenut vom Steckverbinderkörper gebildet sind, und wobei weiters vorgesehen ist
- dass die zweite Nutseitenfläche von einem ersten Wandabschnitt der Aufnahmehülse gebildet ist, welcher erste Wandabschnitt ein integraler Bestandteil der Aufnahmehülse ist, und
- dass der erste Wandabschnitt im Bereich der zweiten Nutseitenfläche bezüglich der im Bereich des Aufnahmeraums verlaufenden Längsachse eine in Richtung auf die Längsachse gerichtete Ausrichtung aufweist,
- wobei der erste Wandabschnitt an einer Stirnfläche des Steckverbinderkörpers anliegend abgestützt ist.

Erfindungsgemäß ist ein dritter Wandabschnitt der Aufnahmehülse vorgesehen, welcher dritte Wandabschnitt hohlzylinderförmig ausgebildet ist und bezüglich der im Bereich des Aufnahmeraums verlaufenden Längsachse an einem von der Längsachse abgewendeten zweiten Wandabschnittende des ersten Wandabschnitts angeordnet und mit diesem verbunden ist, weiter ist der dritte Wandabschnitt auf die vom Steckverbinderkörper abgewendete Seite ragend angeordnet und endet an einem ersten Aufnahmehülsenende.

Der dadurch erzielte Vorteil liegt darin, dass so direkt durch einen eigens ausgeformten Wandteil, welcher Bestandteil der Aufnahmehülse ist, eine der Nutseitenflächen zur Aufnahme und Positionierung des Dichtelements ausgebildet wird. Damit brauch kein eigener zusätzlicher Bauteil geschaffen und auch beim Zusammenbau des Steckverbinders nicht gesondert gehandhabt und gefügt werden. Jener Wandteil zur Bildung eines Teils der Aufnahmenut wird bei der Herstellung und Umformung des Blechs zur Aufnahmehülse gleich mit ausgebildet. Beim Zusammenbau des Steckverbinderkörpers ist zuerst das Dichtelement in den dafür vorgesehenen Teilabschnitt der bereits bestehenden Aufnahmenut eingesetzt und nachfolgend die Aufnahmehülse auf den Steckverbinderkörper aufgeschoben. Ist die korrekte Sollposition erreicht, befindet sich das Dichtelement in der kompletten Aufnahmenut und es ist nur mehr die Aufnahmehülse mit dem Steckverbinderkörper in dieser Stellung zu verbinden.

Weiters kann es vorteilhaft sein, wenn der erste Wandabschnitt im Bereich der zweiten Nutseitenfläche eine normale Ausrichtung bezüglich der im Bereich des Aufnahmeraums verlaufenden Längsachse aufweist. Damit kann eine definierte Ausrichtung der zweiten Nutseitenfläche erzielt werden. Weiters kann so aber auch eine Positionierhilfe beim Fügen der Aufnahmehülse mit dem Steckverbinderkörper zur Verfügung gestellt werden.

Eine andere Ausführungsform zeichnet sich dadurch aus, dass die erste Nutseitenfläche im Axialschnitt gesehen ausgehend von der Nutgrundfläche bezüglich der im Bereich des Aufnahmeraums verlaufenden Längsachse einen in Richtung auf die zweite Nutseitenfläche sowie in Richtung auf die Längsachse zulaufenden konischen Längsverlauf aufweist. Damit kann ein zusätzlicher Aufnahmeraum für das Dichtelement sowie auch eine noch bessere Abstützwirkung des Dichtelements beim Zusammenbau mit dem zweiten Steckverbinder geschaffen werden.

Eine weitere mögliche Ausführungsform hat die Merkmale, dass der Steckverbinderkörper im Axialschnitt gesehen ausgehend von seinem ersten Endbereich hin in Richtung auf seinen zweiten Endbereich zumindest abschnittsweise einen sich stufenförmig verkleinernden Längsverlauf aufweist. Damit kann im ersten Endbereich ein ausreichend größer Aufnahmeraum für den zweiten Steckverbinder geschaffen werden. Im Bereich des zweiten Endes des Steckverbinderkörpers wird so der Anschluss von dazu kleineren Anschlussteilen ohne zusätzliches Reduzierelement ermöglicht.

Eine weitere Ausbildung sieht vor, dass der Steckverbinderkörper an seinem ersten Endbereich außenseitig einen Kopplungsabschnitt für die Aufnahmehülse bildet. Damit wird ein eigens maßlich dazu abgestimmter Längsabschnitt an der Außenseite des Steckverbinderkörpers geschaffen.

Eine andere Ausführungsform zeichnet sich dadurch aus, dass die Längsachse des Steckverbinderkörpers in ihrem Längsverlauf ausgehend vom ersten Endbereich hin zum zweiten Endbereich durchgehend geradlinig verlaufend ausgebildet ist oder im Bereich von beiden Endbereichen jeweils geradlinig verlaufend und dazwischen bogenförmig gekrümmt verlaufend ausgebildet ist. Damit kann der Steckverbinderkörper auf jeden Einsatzzweck und den im Einbau vorhandenen Einbaufreiraum abgestimmt werden.

Eine weitere bevorzugte Ausführungsform ist dadurch gekennzeichnet, dass die Stirnfläche bezüglich der im Bereich des Aufnahmeraums verlaufenden Längsachse eine normale Ausrichtung zu dieser aufweist. So kann die Stirnfläche des Steckverbinderkörpers als definierter Axialanschlag beim Fügen der Aufnahmehülse am Steckverbinderkörper dienen. Weiters kann es vorteilhaft sein, wenn ein zweiter Wandabschnitt der Aufnahmehülse vorgesehen ist, welcher zweite Wandabschnitt an einem von der Nutgrundfläche in Richtung auf die Längsachse beabstandeten ersten Wandabschnittende des ersten Wandabschnitts angeordnet und mit diesem verbunden ist. Durch das Vorsehen des zweiten Wandabschnitts und der Verbindung mit dem ersten Wandabschnitt kann eine scharf ausgebildete Stirnkante vermieden werden. Dies kann ansonsten beim Fügen und/oder im Einsatz befindlicher Steckerbaugruppe zu oberflächlichen Beschädigungen am zweiten Steckverbinder führen.

Eine andere alternative Ausführungsform zeichnet sich dadurch aus, dass der zweite Wandabschnitt auf die vom Steckverbinderkörper abgewendete Seite ragend angeordnet ist. Durch den auf die vom Dichtelement abgewendete Seite ragenden zweiten Wandabschnitt kann eine gewisse Vorzentrierung beim Fügen deszweiten Steckverbinders mit dem ersten Steckverbinder erzielt werden.

Eine weitere mögliche und gegebenenfalls alternative Ausführungsform hat die Merkmale, dass der zweite Wandabschnitt im Axialschnitt gesehen bezüglich der im Bereich des Aufnahmeraums verlaufenden Längsachse einen auf die von der Längsachse abgewendete Seite konisch erweiternden Längsverlauf aufweist. Damit kann die Zentrierungsgenauigkeit bezüglich der Längsachse bei fortschreitendem Fügevorgang stets erhöht werden.

Eine andere Ausführungsform zeichnet sich dadurch aus, dass zumindest ein vierter Wandabschnitt der Aufnahmehülse vorgesehen ist, welcher vierte Wandabschnitt bezüglich der im Bereich des Aufnahmeraums verlaufenden Längsachse an der von der Längsachse abgewendeten Seite des dritten Wandabschnitts in einem Teilabschnitt in paralleler Ausrichtung zu diesem verlaufend sowie an diesem anliegend angeordnet ist und mittels eines Verbindungs-Wandabschnitts mit dem ersten Aufnahmehülsenende des dritten Wandabschnitts verbunden ist. Damit kann eine zusätzliche Versteifung der Aufnahmehülse, insbesondere für das Anbringen des federnden Arretierelements in dessen Arretierstellung mit dem zweiten Steckverbinder, erzielt werden.

Eine weitere bevorzugte Ausführungsform ist dadurch gekennzeichnet, dass ein Kopplungs-Wandabschnitt der Aufnahmehülse vorgesehen ist, welcher Kopplungs-Wandabschnitt außenseitig anliegend am ersten Endbereich des Steckverbinderkörpers angeordnet ist und der Kopplungs-Wandabschnitt mittels zumindest eines in diesem bleibend ausgeformten Umformabschnitts feststehend am Steckverbinderkörper gehalten ist. Damit wir an der Aufnahmehülse ein eigens dazu vorgesehener und maßlich abgestimmter Teilabschnitt geschaffen.

Weiters kann es vorteilhaft sein, wenn der zumindest eine Umformabschnitt über den Umfang des Kopplungs-Wandabschnitts voll umfänglich ausgebildet ist und an einer der Stirnfläche des Steckverbinderkörpers gegenüberliegenden Stirnfläche des Kopplungsabschnitts des Steckverbinderkörpers anliegend abgestützt ist. So kann eine in Axialer Richtung sehr stabile Halterung am Steckverbinderkörper geschaffen werden. Eine Positionierung in Umfangsrichtung wird durch gegenseitig wirkende Reibungskräfte erreicht.

Eine andere Ausführungsform zeichnet sich dadurch aus, dass mehrere über den Umfang verteilt angeordnete Kopplungsvertiefungen vorgesehen sind, und in jede der Kopplungsvertiefungen jeweils einer der Umformabschnitte des Kopplungs-Wandabschnitts der Aufnahmehülse plastisch bleibend hineinverformt ist. Durch die in die jeweiligen Kopplungsvertiefungen jeweils hinein verformten Umformabschnitte wird eine in Umfangsrichtung dauerhafte Fixierung und Halterung erzielt.

Eine weitere mögliche Ausführungsform hat die Merkmale, dass jeder der Umformabschnitte eine sich in Umfangsrichtung erstreckende, schlitzförmige Durchbrechung und eine in die Durchbrechung hineinragende Kopplungslasche umfasst und dass die Kopplungslasche in eine der Kopplungsvertiefungen plastisch bleibend hineinverformt ist. Durch die Kombination der Durchbrechung im Kopplungs-Wandabschnitt und der in die Durchbrechung hineinragenden Kopplungslasche kann so eine bessere Kontrolle und gegenseitige Ausrichtung beim Fügevorgang ermöglicht werden. Darüber hinaus kann damit aber auch eine in Umfangsrichtung wirkende Positionierung durch das Zusammenwirken der jeweils in die Kopplungsvertiefungen hineinragenden Kopplungslaschen erzielt werden.

Eine weitere Ausbildung sieht vor, dass ein äußerer Umfangsrand des Kopplungs-Wandabschnitts bei jedem der Umformabschnitte bezüglich der im Bereich des Aufnahmeraums verlaufenden Längsachse in Richtung auf diese plastisch bleibend umgeformt ist. Damit kann eine zusätzliche und stabilere relative Positionierung zwischen dem Steckverbinderkörper und der Aufnahmehülse geschaffen werden.

Weiters kann es vorteilhaft sein, wenn zumindest eine Stützschulter an der Stirnfläche des Steckverbinderkörpers in seinem ersten Endbereich vorgesehen ist und an dieser Stützschulter der dritte Wandabschnitt der Aufnahmehülse bezüglich der im Bereich des Aufnahmeraums verlaufenden Längsachse in radialer Richtung auf die von der Längsachse abgewendete Seite anliegend abgestützt ist. Durch das Vorsehen der Stützschulter kann eine noch exaktere gegenseitige Positionierung der Aufnahmehülse und des Steckverbinderkörpers geschaffen werden.

Eine weitere mögliche und gegebenenfalls alternative Ausführungsform hat die Merkmale, dass der erste Wandabschnitt im Axialschnitt gesehen einen abgewinkelten Längsverlauf aufweist und vom ersten Wandabschnitt sowohl ein weiterer Teilabschnitt der Nutgrundfläche der Aufnahmenut als auch die zweite Nutseitenfläche gebildet sind. Durch diese zusätzliche Umformung des ersten Wandabschnitts kann für das Dichtelement eine noch stabilere Halterung und Positionierung in der Aufnahmenut erzielt werden. Es ist nur auf einen in etwa ebenflächigen Übergang zwischen den beiden Teilabschnitten der Nutgrundfläche zu achten. Darüber hinaus kann so auch bei Temperaturänderungen, insbesondere bei höheren Temperaturen, bei denen das Kunststoffmaterial leichter aufgeweitet wird oder sich selbst weiter ausdehnt, ein sicherer Dichtsitz des Dichtelements am zweiten Steckverbinder erzielt werden.

Die Erfindung umfasst auch noch eine Steckerbaugruppe, welche einen ersten weiblichen Steckverbinder und einen dazu passenden ausgebildeten zweiten männlichen Steckverbinder umfasst. Als erster Steckverbinder wird jener erfindungsgemäß ausgebildete weiblicher Steckverbinder verwendet.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel einer Steckerbaugruppe mit einem ersten und zweiten Steckverbinder, in voneinander distanzierter Anordnung, im Axialschnitt;
- Fig. 2: eine vergrößerte Detaildarstellung des ersten Steckverbinders gemäß eingetragenem Detail II in Fig. 1;
- Fig. 3: ein zweites Ausführungsbeispiel eines ersten Steckverbinders, in Draufsicht und Viertelschnitt;
- Fig. 4: ein drittes Ausführungsbeispiel eines ersten Steckverbinders, in Draufsicht und Viertelschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

Weiters wird der allgemeine Begriff "rohrförmig" verwendet. Es werden darunter alle Baukörper mit einer im wesentlichen kreisringförmigen Querschnittsform verstanden, wobei deren Längserstreckung von vollständig geradlinig bis hin zu bogenförmig gekrümmt verstanden wird. In den voneinander beabstandeten Endbereichen ist anschließend an den gekrümmten oder bogenförmigen Längsverlauf bevorzugt jeweils ein geradliniger Längsverlauf vorgesehen.

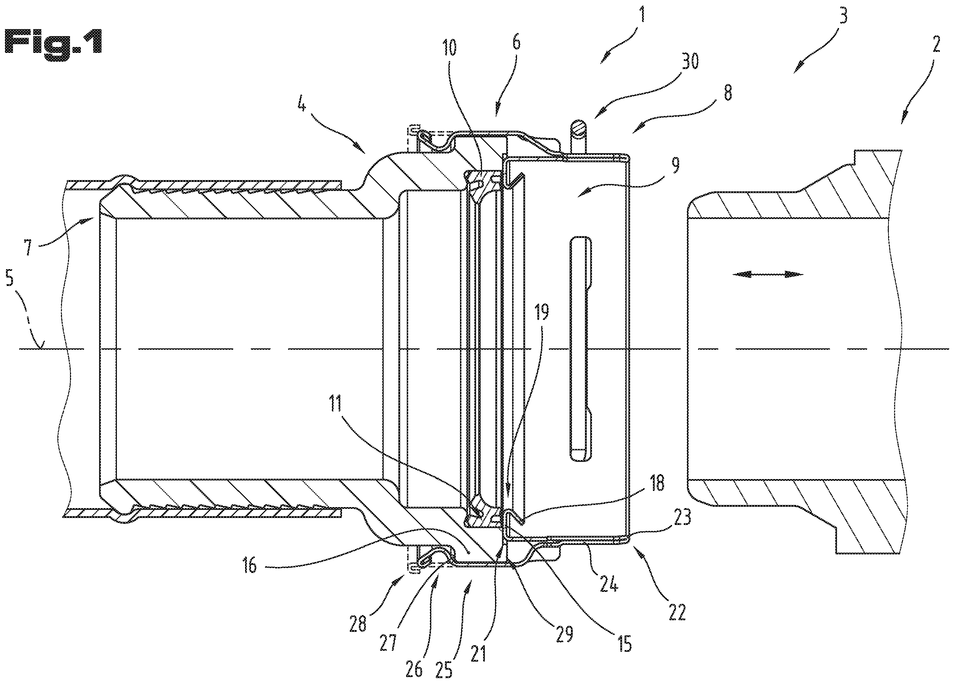

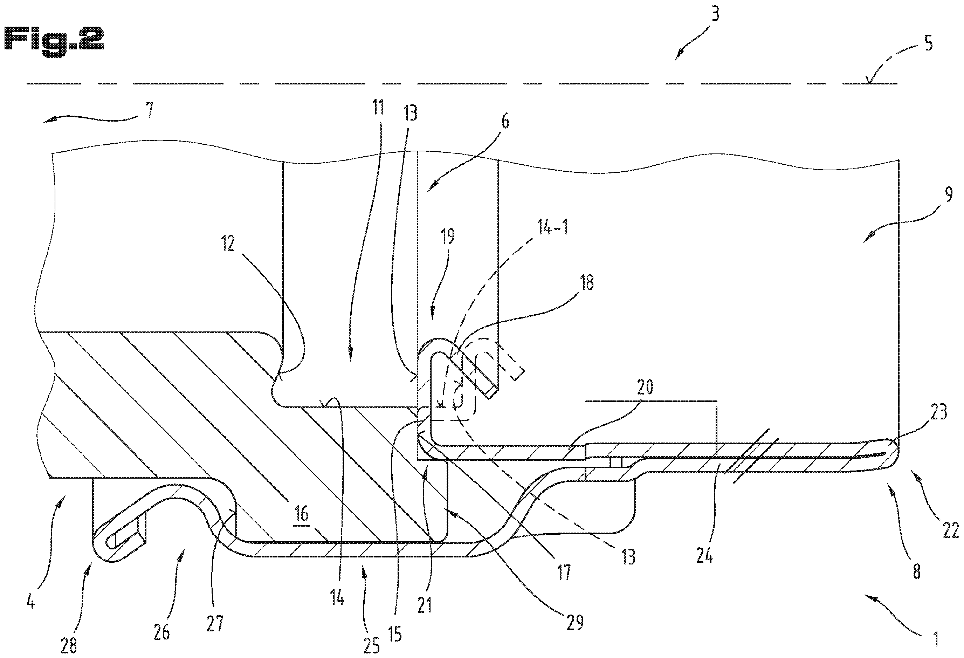

In den Fig. 1 und 2 ist ein erstes mögliches Ausführungsbeispiel eines ersten Steckverbinders 1 gezeigt, welcher zur Verbindung von unterschiedlichsten Leitungen für flüssige und/oder gasförmige Medien dient.

Der erste Steckverbinder 1 ist als weibliche Bauteilgruppe ausgebildet und dient zur Aufnahme eines dazu passenden zweiten Steckverbinders 2, welcher als männlicher Stecker ausgebildet ist und in der Fig. 1 rechts neben dem ersten Steckverbinder 1 angedeutet ist. Gemeinsam bilden der erste Steckverbinder 1 und der zweite Steckverbinder 2 eine Steckerbaugruppe 3.

Der erste Steckverbinder 1 umfasst seinerseits einen Steckverbinderkörper 4. Der Steckverbinderkörper 4 ist aus einem Kunststoffwerkstoff oder einem Kunststoffmaterial gebildet und im wesentlichen rohrförmig ausgebildet. Unter rohrförmig wird ein im wesentlichen kreisrunder Innenquerschnitt verstanden, wobei der Längsverlauf von geradlinig bis hin zu bogenförmig oder gekrümmt verstanden wird. Die jeweiligen Endbereiche oder Endabschnitte sind bevorzug geradlinig verlaufend ausgebildet, um eine Verbindung mit einem Schlauch oder einem Rohr einfacher durchführen und/oder herstellen zu können. Die Anschlussteile können aus den unterschiedlichsten Werkstoffen gebildet sein, wobei als Beispiel ein Schlauchstück am ersten Steckverbinder 1 angedeutet ist.

Der Steckverbinderkörper 4 definiert eine Längsachse 5, welche sich zwischen einem ersten Endbereich 6 und einem davon beabstandet angeordneten zweiten Endbereich 7 erstreckt. Je nach Ausbildung und Form des Steckverbinderkörpers 4 kann der Längsverlauf der Längsachse 5 ausgehend vom ersten Endbereich 6 hin zum zweiten Endbereich 7 durchgehend geradlinig verlaufend ausgebildet sein.

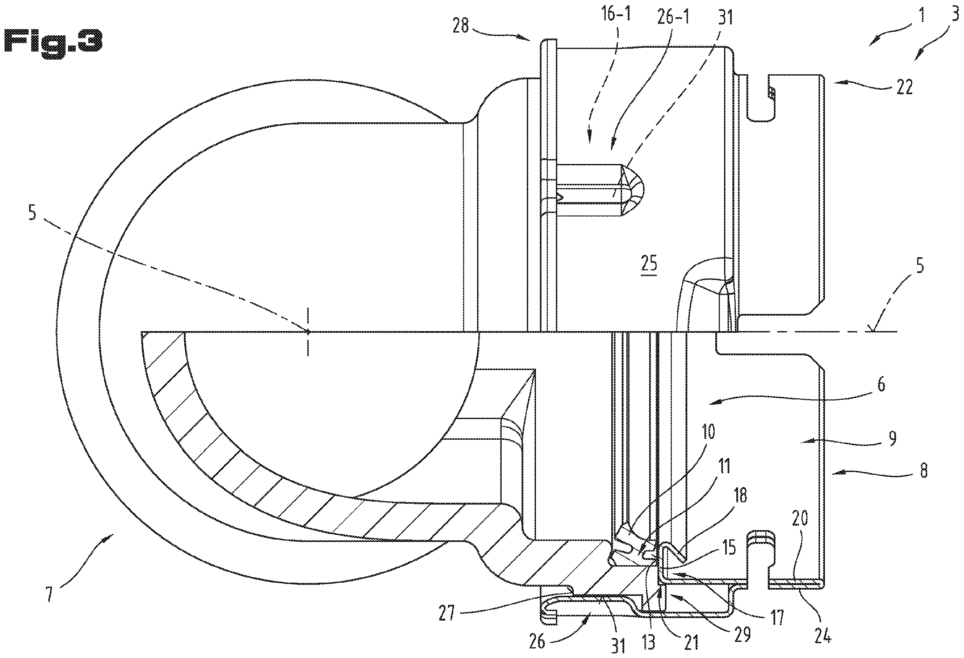

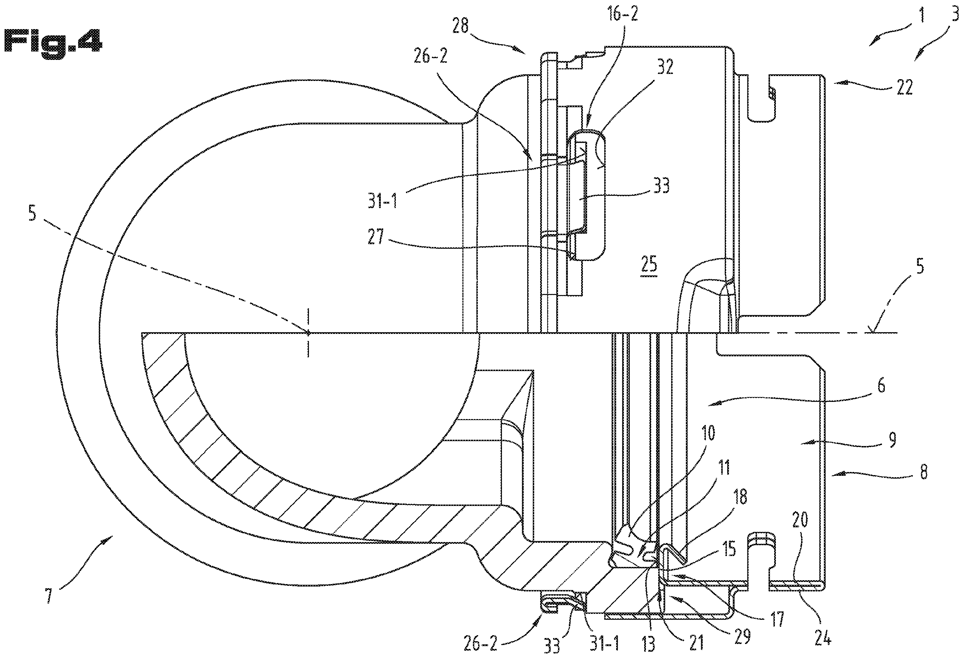

Ein davon abweichender bogenförmig gekrümmter Längsverlauf ist in den nachfolgenden Fig. 3 und 4 gezeigt. Bei diesen möglichen Ausführungsbeispielen ist die Längsachse 5 im Abschnitt der beiden Endbereiche 6 und 7 jeweils geradlinig verlaufend ausgebildet. In dem dazwischen befindlichen Steckverbinderkörper-Abschnitt ist die Längsachse 5 bogenförmig gekrümmt verlaufend ausgebildet.

Weiters umfasst der erste Steckverbinder 1 noch eine Aufnahmehülse 8, welche ihrerseits aus einem metallischen Werkstoff bzw. einem metallischen Material gebildet ist. Die Aufnahmehülse 8 wird zumeist mittels eines sogenannten Tiefzieh-Umformvorgangs aus einem ebenflächigen Blech hergestellt. Im vorliegenden Ausführungsbeispiel ist die Aufnahmehülse 8 im ersten Endbereich 6 des Steckverbinderkörpers 4 außenseitig angeordnet und am Steckverbinderkörper 4 feststehend gehalten. Ein Teilabschnitt der Aufnahmehülse 8 umschließt den Steckverbinderkörper 4, wobei ein weiterer Teilabschnitt den Steckverbinderkörper 4 auf die vom zweiten Endbereich 7 abgewendete Seite überragt. Vom Steckverbinderkörper 4 und der Aufnahmehülse 8 wird innenseitig ein weiblicher Aufnahmeraum 9 definiert, in welchen der zweite Steckverbinder 2 einsetzbar ist. Der Aufnahmeraum 9 ist hohlzylinderförmig ausgebildet.

Um eine Abdichtung zwischen dem in den Aufnahmeraum 9 einzusteckenden oder eingesteckten zweiten Steckverbinder 2 und dem diesen umschließenden ersten Steckverbinder 1 zu schaffen, kann zumindest ein eigenes Dichtelement 10 vorgesehen sein. Das zumindest eine Dichtelement 10 ist ringförmig umlaufend ausgebildet und kann seinerseits alle zum Anmeldezeitpunkt bekannten Querschnittsformen gemäß dem Stand der Technik aufweisen. Der besseren Übersichtlichkeit halber ist in der vergrößerten Darstellung der Fig. 2 das Dichtelement 10 nicht dargestellt worden.

Das zumindest eine Dichtelement 10 ist in einer eigenen dazu vorgesehenen Aufnahmenut 11 aufgenommen und in dieser in Richtung der Längsachse 5 positioniert gehalten. Die Aufnahmenut 11 ist über den Umfang durchlaufend ausgebildet und umfasst eine erste Nutseitenfläche 12, eine davon in Richtung der Längsachse 5 beabstandet angeordnete zweite Nutseitenfläche 13 und an deren Basis eine Nutgrundfläche 14. Die erste Nutseitenfläche 12 und die Nutgrundfläche 14 der Aufnahmenut 11 sind oder werden direkt vom Steckverbinderkörper 4 gebildet oder definiert. Die erste Nutseitenfläche 12 ist bei diesem Ausführungsbeispiel dem zweiten Endbereich 7 näher liegend angeordnet als die zweite Nutseitenfläche 13. Die Nutgrundfläche 14 endet direkt an einer Stirnfläche 17 des Steckverbinderkörpers 4 und erstreckt sich in den Steckverbinderkörper 4 bis zur ersten Nutseitenfläche 12 hinein.

Jene zur Aufnahme des zweiten Steckverbinders 2 zugewendete offene Seite der Aufnahmehülse 8 näherliegende zweite Nutseitenfläche 13 der Aufnahmenut 11 wird von einem ersten Wandabschnitt 15 der Aufnahmehülse 8 gebildet. Der erste Wandabschnitt 15 bildet seinerseits einen integralen Bestandteil der Aufnahmehülse 8 und stellt somit einen und aus dem selben Ausgangsblech hergestellten Teilbereich der Aufnahmehülse 8 dar. Die gesamte Aufnahmehülse 8 ist bevorzugt aus einem Stück als einstückiger Bauteil gebildet. Der erste Wandabschnitt 15 weist seinerseits bezüglich der im Bereich des Aufnahmeraums 9 verlaufenden Längsachse 5 eine in Richtung auf die Längsachse 5 gerichtete Ausrichtung auf. Bevorzugt weist der erste Wandabschnitt 15 eine normale Ausrichtung bezüglich der im Bereich des Aufnahmeraums 9 verlaufenden Längsachse 5 auf und ist in diesem Fall in einer in normaler Ausrichtung bezüglich der Längsachse 5 verlaufenden Normalebene angeordnet.

Die erste Nutseitenfläche 12 kann je nach Wahl und Ausbildung des Querschnitts des Dichtelements 10 im Axialschnitt gesehen ausgehend von der Nutgrundfläche 14 bezüglich der im Bereich des Aufnahmeraums 9 verlaufenden Längsachse 5 einen in Richtung auf die zweite Nutseitenfläche 13 sowie in Richtung auf die Längsachse 5 zulaufenden konischen Längsverlauf aufweisen.

Zumeist weist der Steckverbinderkörper 4 im Axialschnitt gesehen ausgehend von seinem ersten Endbereich 6 hin in Richtung auf seinen zweiten Endbereich 7 zumindest abschnittsweise einen sich stufenförmig verkleinernden Längsverlauf auf. An der Außenseite weist der Steckverbinderkörper 4 im Längsabschnitt seines ersten Endbereichs 6 einen Kopplungsabschnitt 16 für die Halterung der Aufnahmehülse 8 auf oder definiert diesen. Die gegenseitige Verbindung zwischen der Aufnahmehülse 8 und dem Steckverbinderkörper 4 erfolgt durch plastische Umformung des metallischen Werkstoffs der Aufnahmehülse 8. Die Halterung kann bevorzugt auf formschlüssiger Basis bezüglich der im Bereich des Aufnahmeraums 9 verlaufenden Längsachse 5 in Richtung der Längserstreckung der Längsachse 5 erfolgen. Zusätzlich dazu kann auch noch eine die rotatorische Relativbewegung zwischen dem Steckverbinderkörper 4 und der Aufnahmehülse 8 unterbindende oder in gewissen Grenzen unterbindende Anordnung oder Vorkehrung getroffen werden, wie dies nachfolgend noch detailliert beschrieben wird.

Der erste Wandabschnitt 15 der Aufnahmehülse 8 ist an der Stirnfläche 17 des Steckverbinderkörpers 4 anliegend daran abgestützt. Die Stirnfläche 17 ihrerseits kann bevorzugt eine bezüglich der im Bereich des Aufnahmeraums 9 verlaufenden Längsachse 5 normale Ausrichtung zu dieser aufweisen. Im Axialschnitt gesehen erstreckt sich der erste Wandabschnitt 15 über die Nutgrundfläche 14 der Aufnahmenut 11 bezüglich der im Bereich des Aufnahmeraums 9 verlaufenden Längsachse 5 auf die von der Längsachse 5 abgewendete Seite oder Richtung hinaus. Dies bevorzugt in radialer Richtung.

Die Aufnahmehülse 8 kann auch noch einen zweiten Wandabschnitt 18 umfassen, welcher an einem von der Nutgrundfläche 14 in Richtung auf die Längsachse 5 beabstandeten ersten Wandabschnittende 19 des ersten Wandabschnitts 15 angeordnet und mit diesem verbunden ist. Der zweite Wandabschnitt 18 ragt ausgehend vom ersten Wandabschnitt 15 auf die vom Steckverbinderkörper 4 abgewendete Seite vor. Dies entgegen der Einschubrichtung des zweiten Steckverbinders 2 in den ersten Steckverbinder 1. Bevorzugt weist der zweite Wandabschnitt 18 im Axialschnitt gesehen bezüglich der im Bereich des Aufnahmeraums 9 verlaufenden Längsachse 5 einen auf die von der Längsachse 5 abgewendete Seite konisch erweiternden Längsverlauf auf. Damit kann eine zusätzliche Versteifung und Lagepositionierung des ersten Wandabschnitts 15 erzielt werden. Weiters kann aber auch das Einstecken erleichtert werden, da eine gewisse Vorzentrierung des zweiten Steckverbinders 2 hin zum Dichtabschnitt erzielbar ist.

Anschließend an den ersten Wandabschnitt 15 ist ein dritter Wandabschnitt 20 zur Bildung der Aufnahmehülse 8 vorgesehen. Die Grundform ist im Axialschnitt gesehen hohlzylinderförmig gewählt. Der erste Wandabschnitt 15 weist bezüglich der im Bereich des Aufnahmeraums 9 verlaufenden Längsachse 5 an seiner von der Längsachse 5 abgewendeten Seite ein zweites Wandabschnittende 21 auf. Der dritte Wandabschnitt 20 ist im Bereich des zweiten Wandabschnittendes 21 mit dem ersten Wandabschnitt 15 einstückig verbunden. Der dritte Wandabschnitt 20 ragt ausgehend vom ersten Wandabschnitt 15 auf die vom Steckverbinderkörper 4 8 abgewendete Seite und endet an einem ersten Aufnahmehülsenende 22.

Mittels eines am ersten Aufnahmehülsenende 22 befindlichen Verbindungs-Wandabschnitts 23 ist ein vierter Wandabschnitt 24 als Bestandteil der Aufnahmehülse 8 mit dieser einstückig verbunden. Der vierte Wandabschnitt 24 ist bezüglich der im Bereich des Aufnahmeraums 9 verlaufend angeordneten Längsachse 5 an der von der Längsachse 5 abgewendeten Seite des dritten Wandabschnitts 20 verlaufend angeordnet. Bevorzug verläuft ein Teilabschnitt des vierten Wandabschnitts 24 in paralleler Ausrichtung bezüglich des dritten Wandabschnitts 20 und kann auch noch anliegend an diesem angeordnet sein. Damit kann in diesem Teilabschnitt eine doppelte Wandstärke erzielt werden.

Die Aufnahmehülse 8 umfasst auch noch einen Kopplungs-Wandabschnitt 25, welcher zur formschlüssigen Kopplung und Halterung mit dem Steckverbinderkörper 4 vorgesehen ist. Der Kopplungs-Wandabschnitt 25 ist außenseitig bevorzugt anliegend am ersten Endbereich 6 des Steckverbinderkörpers 4 angeordnet und ist in Axialrichtung nachfolgend an den vierten Wandabschnitt 24 als Teil der Aufnahmehülse 8 ausgebildet. Am Steckverbinderkörper 4 ist dazu der zuvor beschriebene Kopplungsabschnitt 16 vorgesehen. Der Kopplungs-Wandabschnitt 25 liegt außenseitig und bevorzugt über den Umfang durchlaufend am Kopplungsabschnitt 16 des Steckverbinderkörpers 4 an und ragt über diesen auf die von der im ersten Endbereich 6 befindliche Stirnfläche 17 abgewendete Seite oder Richtung vor. Durch diese Abstützung und das gegenseitige Anliegen aneinander in gewissen Maßtoleranzen wird zumindest jener Abschnitt des Steckverbinderkörpers 4, welcher innenseitig die Aufnahmenut 11 definiert, gegen ein Aufweiten bei Temperaturänderungen und/oder einem höheren Innendruck vom außenseitig befindlichen Kopplungs-Wandabschnitt 25 stabilisiert gehalten. Damit kann sich der aus dem Kunststoffmaterial gebildete Steckverbinderkörper 4 nicht in einem großen Ausmaß in radialer Richtung aufweiten. So kann für das Dichtelement 10 auch bei höheren Temperaturen und/oder einem erhöhten Innendruck stets eine sichere Anlage und eine damit verbundene dauerhafte Dichtwirkung an der Außenfläche des zweiten Steckverbinders 2 erzielt werden.

Im vorliegenden Ausführungsbeispiel gemäß der Fig. 1 und 2 ist ein voll umfänglich ausgebildeter Umformabschnitt 26 an der Aufnahmehülse 8 vorgesehen. Der Umformabschnitt 26 wird nach dem Aufschieben der Aufnahmehülse 8 auf den Steckverbinderkörper 4 durch bleibende plastische Umformung des metallischen Werkstoffs ausgebildet. Dazu wird der in Axialrichtung über den zylindrischen Abschnitt des Kopplungsabschnitts 16 vorragende Kopplungs-Wandabschnitt 25 der Aufnahmehülse 8 in Richtung auf die im Bereich des Aufnahmeraums 9 verlaufende Längsachse 5 hin umgeformt. Eine Stirnfläche 27 des Kopplungsabschnitts 16 des Steckverbinderkörpers 4 bildet eine Anlagefläche und eine Abstützfläche für den bleibend ausgeformten Umformabschnitt 26 auf der der Stirnfläche 17 gegenüberliegenden und somit dem zweiten Endbereich 7 zugewendeten Seite aus. Der Kopplungs-Wandabschnitt 25 der Aufnahmehülse 8 bildet ein zweites Aufnahmehülsenende 28 der Aufnahmehülse 8 aus, welches dem ersten Aufnahmehülsenende 22 gegenüberliegend angeordnet ist. In der Fig. 1 ist der noch unverformte Kopplungs-Wandabschnitt 25 mit seinem zweiten Aufnahmehülsenende 28 in strichlierten Linien dargestellt.

Mittels des hier umlaufend ausgebildeten Umformabschnitts 26 ist die Aufnahmehülse 8 in axialer Richtung auf die vom zweiten Endbereich 7 abgewendete Seite oder Richtung feststehend gehalten. In der Gegenrichtung und somit in Einschubrichtung des zweiten Steckverbinder 2 in den ersten Steckverbinder 1 ist die Aufnahmehülse 8 mittels des ersten Wandabschnitts 15 in Richtung auf den zweiten Endbereich 7 in Axialrichtung abgestützt. Dies erfolgt an der Stirnfläche 17 des Steckverbinderkörpers 4.

Weiters kann an der Stirnfläche 17 des Steckverbinderkörpers 4 in seinem ersten Endbereich 6 zumindest eine Stützschulter 29 ausgebildet oder vorgesehen sein. Die Stützschulter 29 kann dazu dienen, dass sich der dritte Wandabschnitt 20 der Aufnahmehülse 8 bezüglich der im Bereich des Aufnahmeraums 9 verlaufenden Längsachse 5 in radialer Richtung auf die von der Längsachse 5 abgewendete Seite anliegend abstützt. Damit kann eine zusätzliche Positionierung der ersten drei Wandabschnitte 15, 18 und 20 erzielt werden.

Weiters ist noch angedeutet, wie dies als allgemein bekannt gilt, dass ein Arretierelement 30 zur gegenseitigen Arretierung bei ineinander gesteckten ersten und zweiten Steckverbindern 1, 2 als Bestandteil der Steckerbaugruppe 3 vorgesehen sein kann. Das Arretierelement 30 ist zumeist als federnder Steckbügel ausgebildet, welcher durch mehrere in der Aufnahmehülse 8 ausgebildete Öffnungen hindurchgreift und mit einer Arretiernut im zweiten Steckverbinder 2 in Eingriff steht.

In der Fig. 2 ist in strichlierten Linien noch eine mögliche Ausbildung des ersten Wandabschnitts 15 dargestellt. Bei diesem möglichen Ausführungsbeispiel weist der erste Wandabschnitt 15 im Axialschnitt gesehen einen abgewinkelten bzw. gekröpft ausgebildeten Längsverlauf auf. So wird es möglich, dass der erste Wandabschnitt 15 nicht nur die zweite Nutseitenfläche 13 sondern auch einen weiteren Teilabschnitt der Nutgrundfläche 14-1 der Aufnahmenut 11 bildet. Damit wird hier ein erster Teilabschnitt der Nutgrundfläche 14 vom Steckverbinderkörper 4 und der weitere oder zweite Teilabschnitt der Nutgrundfläche 14-1 vom ersten Wandabschnitt 15 gebildet.

In den nachfolgenden Fig. 3 und 4 sind weitere mögliche Ausbildungen des ersten Steckverbinders 1 dargestellt. Im Gegensatz zu dem Ausführungsbeispiel in den Fig. 1 und 2 ist der Steckverbinderkörper 4 nicht durchgängig geradlinig zwischen seinem ersten und zweiten Endbereich 6, 7 verlaufend ausgebildet, sondern als Bogenstück, bei dem die Längsachse 5 im ersten Endbereich 6 und die Längsachse 5 im zweiten Endbereich 7 einen Winkel zwischen sich einschließen. In den nachfolgenden Ausführungsbeispielen ist der Winkel mit 90° gewählt. Es sei angemerkt, dass dieser Winkel auch einen davon abweichenden Wert aufweisen kann und z.B. als spitzer Winkel oder stumpfer Winkel ausgebildet sein kann.

Der grundsätzliche Aufbau des ersten Steckverbinders 1 mit dem Steckverbinderkörper 4 und der Aufnahmehülse 8 sowie der Ausbildung der Aufnahmenut 11 mit dem darin aufgenommenen Dichtelement 10 entspricht jener Ausbildung, wir diese bereits detailliert in den Fig. 1 und 2 beschrieben worden ist. Nachfolgend werden wiederum für gleiche Teile gleiche Bezugszeichen bzw. Bauteilbezeichnungen wie in den vorangegangenen Fig. 1 und 2 verwendet. Um unnötige Wiederholungen zu vermeiden, wird auf die detaillierte Beschreibung in den vorangegangenen Fig. 1 und 2 hingewiesen bzw. Bezug genommen.

Die Fig. 3 zeigt den ersten Steckverbinder 1 in einer Draufsicht sowie im Viertelschnitt durch den ersten Endbereich 6. Die Ausbildung des Umformabschnitts 26-1 und des Kopplungsabschnitts 16-1 sind jedoch unterschiedlich zur Ausbildung in den Fig. 1 und 2 ausgeführt.

Es ist hier kein über den Umfang durchlaufend ausgebildeter Umformabschnitt 26-1 des Kopplungs-Wandabschnitts 25 der Aufnahmehülse 8 vorgesehen, sondern in dem vom Kopplungs-Wandabschnitt 25 darunterliegenden und abgedeckten Kopplungsabschnitt 16-1 sind mehrere über den Umfang verteilt angeordnete Kopplungsvertiefungen 31 ausgebildet oder vorgesehen. Die Kopplungsvertiefungen 31 erstrecken sich ausgehend von der Stirnfläche 27 des Kopplungsabschnitts 16-1 in Richtung auf die im ersten Endbereich 6 angeordnete Stirnfläche 17 des Steckverbinderkörpers 4 und sind vertieft in einer Außenfläche des Kopplungsabschnitts 16-1 ausgebildet. Bevorzugt weisen die Kopplungsvertiefungen 31 jeweils eine parallele Ausrichtung bezüglich der im Bereich des Aufnahmeraums 9 verlaufenden Längsachse 5 auf. In jede der Kopplungsvertiefungen 31 ist der Umformabschnitt 26-1 des Kopplungs-Wandabschnitts 25 bleibend plastisch hineingeformt.

Die Fig. 4 zeigt den ersten Steckverbinder 1 in einer Draufsicht sowie im Viertelschnitt durch den ersten Endbereich 6. Die Ausbildung des Umformabschnitts 26-2 und des Kopplungsabschnitts 16-2 ist jedoch unterschiedlich zu den zuvor beschriebenen Ausbildungen in den Fig. 1 bis 3 ausgeführt.

Es ist hier ebenfalls kein über den Umfang durchlaufend ausgebildeter Umformabschnitt 26-2 beim Kopplungs-Wandabschnitt 25 der Aufnahmehülse 8 vorgesehen. In dem darunterliegenden und vom Kopplungs-Wandabschnitt 25 abgedeckten Kopplungsabschnitt 16-2 sind ebenfalls mehrere über den Umfang verteilt angeordnete Kopplungsvertiefungen 31-1 ausgebildet oder vorgesehen. Die Kopplungsvertiefungen 31-1 weisen nur eine geringe Längsausdehnung bezüglich der im Bereich des Aufnahmeraums 9 verlaufenden Längsachse 5 auf. Dafür ist bei jeder der Kopplungsvertiefungen 31-1 eine größere Umfangserstreckung vorgesehen.

Bei jedem Umformabschnitt 26-2 ist eine sich in Umfangsrichtung erstreckende, schlitzförmige Durchbrechung 32 im Kopplungs-Wandabschnitt 25 der Aufnahmehülse 8 ausgebildet bzw. angeordnet. Ausgehend vom zweiten Aufnahmehülsenende 28 erstreckt sich bei jedem der Umformabschnitt 26-2 eine Kopplungslasche 33 in Richtung auf das erste Aufnahmehülsenende 22. Das zweite Aufnahmehülsenende 28 überragt die Stirnfläche 27 des Kopplungsabschnitts 16-2 auf die von der Stirnfläche 17 abgewendete Seite oder Richtung.

Der äußere Umfangsrand des Kopplungs-Wandabschnitts 25 ist bei jedem der Umformabschnitte 26-2 bezüglich der im Bereich des Aufnahmeraums 9 verlaufenden Längsachse 5 in Richtung auf diese plastisch bleibend umgeformt. Damit kommt die in die Durchbrechung 32 hineinragende Kopplungslasche 33 mit der jeweiligen Kopplungsvertiefung 31-2 in bleibendem Kopplungseingriff.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| | | 30 | Arretierelement |
| 1 | Steckverbinder | 31 | Kopplungsvertiefung |
| 2 | Steckverbinder | 32 | Durchbrechung |
| 3 | Steckerbaugruppe | 33 | Kopplungslasche |
| 4 | Steckverbinderkörper | | |
| 5 | Längsachse | | |
| 6 | erster Endbereich | | |
| 7 | zweiter Endbereich | | |
| 8 | Aufnahmehülse | | |
| 9 | Aufnahmeraum | | |
| 10 | Dichtelement | | |
| 11 | Aufnahmenut | | |
| 12 | erste Nutseitenfläche | | |
| 13 | zweite Nutseitenfläche | | |
| 14 | Nutgrundfläche | | |
| 15 | erster Wandabschnitt | | |
| 16 | Kopplungsabschnitt | | |
| 17 | Stirnfläche | | |
| 18 | zweiter Wandabschnitt | | |
| 19 | erstes Wandabschnittende | | |
| 20 | dritter Wandabschnitt | | |
| 21 | zweites Wandabschnittende | | |
| 22 | erstes Aufnahmehülsenende | | |
| 23 | Verbindungs-Wandabschnitt | | |
| 24 | vierter Wandabschnitt | | |
| 25 | Kopplungs-Wandabschnitt | | |
| 26 | Umformabschnitt | | |
| 27 | Stirnfläche | | |
| 28 | zweites Aufnahmehülsenende | | |
| 29 | Stützschulter | | |

## Patentansprüche

1. Steckverbinder (1) zur Verbindung von Leitungen für flüssige und/oder gasförmige Medien mit einem zweiten Steckverbinder (2) zur Bildung einer Steckerbaugruppe (3), der erste Steckverbinder (1) umfasst
- einen Steckverbinderkörper (4), welcher Steckverbinderkörper (4) rohrförmig sowie aus einem Kunststoffwerkstoff ausgebildet ist und sich zwischen einem ersten Endbereich (6) und einem zweiten Endbereich (7) eine Längsachse (5) erstreckt,
- eine Aufnahmehülse (8), welche Aufnahmehülse (8) aus einem metallischen Werkstoff gebildet ist und im ersten Endbereich (6) des Steckverbinderkörpers (4) außenseitig angeordnet und am Steckverbinderkörper (4) feststehend gehalten ist, und die Aufnahmehülse (8) den Steckverbinderkörper (4) auf die vom zweiten Endbereich (7) abgewendete Seite überragt, wobei ein weiblicher Aufnahmeraum (9) gemeinsam vom Steckverbinderkörper (4) und der Aufnahmehülse (8) definiert ist, und wobei zumindest der Aufnahmeraum (9) hohlzylinderförmig ausgebildet ist,
- ein Dichtelement (10), welches Dichtelement (10) ringförmig ausgebildet und in dem vom Steckverbinderkörper (4) und der Aufnahmehülse (8) definierten Aufnahmeraum (9) angeordnet und in einer Aufnahmenut (11) mit einer ersten Nutseitenfläche (12), einer zweiten Nutseitenfläche (13) und einer Nutgrundfläche (14) in Richtung der Längsachse (5) positioniert gehalten ist,
- wobei die erste Nutseitenfläche (12) und zumindest ein Teilabschnitt der Nutgrundfläche (14) der Aufnahmenut (11) vom Steckverbinderkörper (4) gebildet sind,
- wobei die zweite Nutseitenfläche (13) von einem ersten Wandabschnitt (15) der Aufnahmehülse (8) gebildet ist, welcher erste Wandabschnitt (15) ein integraler Bestandteil der Aufnahmehülse (8) ist, und
- wobei der erste Wandabschnitt (15) im Bereich der zweiten Nutseitenfläche (13) bezüglich der im Bereich des Aufnahmeraums (9) verlaufenden Längsachse (5) eine in Richtung auf die Längsachse (5) gerichtete Ausrichtung aufweist,
- wobei der erste Wandabschnitt (15) an einer Stirnfläche (17) des Steckverbinderkörpers (4) anliegend abgestützt ist,
**dadurch gekennzeichnet, dass** ein dritter Wandabschnitt (20) der Aufnahmehülse (8) vorgesehen ist, welcher dritte Wandabschnitt (20) hohlzylinderförmig ausgebildet ist und bezüglich der im Bereich des Aufnahmeraums (9) verlaufenden Längsachse (5) an einem von der Längsachse (5) abgewendeten zweiten Wandabschnittende (21) des ersten Wandabschnitts (15) angeordnet und mit diesem verbunden ist, und dass der dritte Wandabschnitt (20) auf die vom Steckverbinderkörper (4) abgewendete Seite ragend angeordnet ist und an einem ersten Aufnahmehülsenende (22) endet.

2. Steckverbinder (1) nach Anspruch 1, **dadurch gekennzeichnet, dass** der erste Wandabschnitt (15) im Bereich der zweiten Nutseitenfläche (13) eine normale Ausrichtung bezüglich der im Bereich des Aufnahmeraums (9) verlaufenden Längsachse (5) aufweist.

3. Steckverbinder (1) nach Anspruch 1 oder 2, **dadurch gekennzeichnet, dass** die erste Nutseitenfläche (12) im Axialschnitt gesehen ausgehend von der Nutgrundfläche (14) bezüglich der im Bereich des Aufnahmeraums (9) verlaufenden Längsachse (5) einen in Richtung auf die zweite Nutseitenfläche (13) sowie in Richtung auf die Längsachse (5) zulaufenden konischen Längsverlauf aufweist.

4. Steckverbinder (1) nach einem der vorhergehenden Ansprüche, **dadurch gekennzeichnet, dass** der Steckverbinderkörper (4) im Axialschnitt gesehen ausgehend von seinem ersten Endbereich (6) hin in Richtung auf seinen zweiten Endbereich (7) zumindest abschnittsweise einen sich stufenförmig verkleinernden Längsverlauf aufweist.

5. Steckverbinder (1) nach einem der vorhergehenden Ansprüche, **dadurch gekennzeichnet, dass** der Steckverbinderkörper (4) an seinem ersten Endbereich (6) außenseitig einen Kopplungsabschnitt (16, 16-1, 16-2) für die Aufnahmehülse (8) bildet.

6. Steckverbinder (1) nach einem der vorhergehenden Ansprüche, **dadurch gekennzeichnet, dass** die Längsachse (5) des Steckverbinderkörpers (4) in ihrem Längsverlauf ausgehend vom ersten Endbereich (6) hin zum zweiten Endbereich (7) durchgehend geradlinig verlaufend ausgebildet ist oder im Bereich von beiden Endbereichen (6) jeweils geradlinig verlaufend und dazwischen bogenförmig gekrümmt verlaufend ausgebildet ist.

7. Steckverbinder (1) nach einem der vorhergehenden Ansprüche, **dadurch gekennzeichnet, dass** die Stirnfläche (17) bezüglich der im Bereich des Aufnahmeraums (9) verlaufenden Längsachse (5) eine normale Ausrichtung zu dieser aufweist.

8. Steckverbinder (1) nach einem der vorhergehenden Ansprüche, **dadurch gekennzeichnet, dass** ein zweiter Wandabschnitt (18) der Aufnahmchülsc (8) vorgesehen ist, welcher zweite Wandabschnitt (18) an einem von der Nutgrundfläche (14) in Richtung auf die Längsachse (5) beabstandeten ersten Wandabschnittende (19) des ersten Wandabschnitts (15) angeordnet und mit diesem verbunden ist.

9. Steckverbinder (1) nach Anspruch 8, **dadurch gekennzeichnet, dass** der zweite Wandabschnitt (18) auf die vom Steckverbinderkörper (4) abgewendete Seite ragend angeordnet ist.

10. Steckverbinder (1) nach Anspruch 8 oder 9, **dadurch gekennzeichnet, dass** der zweite Wandabschnitt (18) im Axialschnitt gesehen bezüglich der im Bereich des Aufnahmeraums (9) verlaufenden Längsachse (5) einen auf die von der Längsachse (5) abgewendete Seite konisch erweiternden Längsverlauf aufweist.

11. Steckverbinder (1) nach einem der vorhergehenden Ansprüche, **dadurch gekennzeichnet, dass** zumindest ein vierter Wandabschnitt (24) der Aufnahmehülse (8) vorgesehen ist, welcher vierte Wandabschnitt (24) bezüglich der im Bereich des Aufnahmeraums (9) verlaufenden Längsachse (5) an der von der Längsachse (5) abgewendeten Seite des dritten Wandabschnitts (20) in einem Teilabschnitt in paralleler Ausrichtung zu diesem verlaufend sowie an diesem anliegend angeordnet ist und mittels eines Verbindungs-Wandabschnitts (23) mit dem ersten Aufnahmehülsenende (22) des dritten Wandabschnitts (20) verbunden ist.

12. Steckverbinder (1) nach einem der vorhergehenden Ansprüche, **dadurch gekennzeichnet, dass** ein Kopplungs-Wandabschnitt (25) der Aufnahmehülse (8) vorgesehen ist, welcher Kopplungs-Wandabschnitt (25) außenseitig anliegend am ersten Endbereich (6) des Steckverbinderkörpers (4) angeordnet ist und der Kopplungs-Wandabschnitt (25) mittels zumindest eines in diesem bleibend ausgeformten Umformabschnitts (26, 26-1, 26-2) feststehend am Steckverbinderkörper (4) gehalten ist.

13. Steckverbinder (1) nach Anspruch 12, **dadurch gekennzeichnet, dass** der zumindest eine Umformabschnitt (26) über den Umfang des Kopplungs-Wandabschnitts (25) voll umfänglich ausgebildet ist und an einer der Stirnfläche (17) des Steckverbinderkörpers (4) gegenüberliegenden Stirnfläche (27) des Kopplungsabschnitts (16) des Steckverbinderkörpers (4) anliegend abgestützt ist.

14. Steckverbinder (1) nach Anspruch 12, **dadurch gekennzeichnet, dass** mehrere über den Umfang verteilt angeordnete Kopplungsvertiefungen (31, 31-1) vorgesehen sind, und in jede der Kopplungsvertiefungen (31, 31-1) jeweils einer der Umformabschnitte (26-1, 26-2) des Kopplungs-Wandabschnitts (25) der Aufnahmehülse (8) plastisch bleibend hineinverformt ist.

15. Steckverbinder (1) nach Anspruch 14, **dadurch gekennzeichnet, dass** jeder der Umformabschnitte (26-2) eine sich in Umfangsrichtung erstreckende, schlitzförmige Durchbrechung (32) und eine in die Durchbrechung (32) hineinragende Kopplungslasche (33) umfasst und dass die Kopplungslasche (33) in eine der Kopplungsvertiefungen (31-1) plastisch bleibend hineinverformt ist.

16. Steckverbinder (1) nach Anspruch 14 oder 15, **dadurch gekennzeichnet, dass** ein äußerer Umfangsrand des Kopplungs-Wandabschnitts (25) bei jedem der Umformabschnitte (26-2) bezüglich der im Bereich des Aufnahmeraums (9) verlaufenden Längsachse (5) in Richtung auf diese plastisch bleibend umgeformt ist.

17. Steckverbinder (1) nach einem der vorhergehenden Ansprüche, **dadurch gekennzeichnet, dass** zumindest eine Stützschulter (29) an der Stirnfläche (17) des Steckverbinderkörpers (4) in seinem ersten Endbereich (6) vorgesehen ist und an dieser Stützschulter (29) der dritte Wandabschnitt (20) der Aufnahmehülse (8) bezüglich der im Bereich des Aufnahmeraums (9) verlaufenden Längsachse (5) in radialer Richtung auf die von der Längsachse (5) abgewendete Seite anliegend abgestützt ist.

18. Steckverbinder (1) nach einem der vorhergehenden Ansprüche, **dadurch gekennzeichnet, dass** der erste Wandabschnitt (15) im Axialschnitt gesehen einen abgewinkelten Längsverlauf aufweist und vom ersten Wandabschnitt (15) sowohl ein weiterer Teilabschnitt der Nutgrundfläche (14-1) der Aufnahmenut (11) als auch die zweite Nutseitenfläche (13) gebildet sind.

19. Steckerbaugruppe (3) umfassend einen ersten weiblichen Steckverbinder (1) und einen dazu passenden ausgebildeten zweiten männlichen Steckverbinder (2), **dadurch gekennzeichnet, dass** der erste Steckverbinder (1) nach einem der vorhergehenden Ansprüche ausgebildet ist.

## Claims

1. A plug connector (1) for connecting lines for liquid and/or gaseous media to a second plug connector (2) thus forming a plug assembly (3), the first plug connector (1) comprising
- a plug connector body (4), which plug connector body (4) is tubular and made of a plastic material and a longitudinal axis (5) extends between a first end region (6) and a second end region (7),
- a receiving sleeve (8), which receiving sleeve (8) is formed from a metallic material and is arranged on the outside in the first end region (6) of the plug connector body (4) and is held fixedly on the plug connector body (4), and the receiving sleeve (8) projects beyond the plug connector body (4) on the side facing away from the second end region (7), wherein a female receiving space (9) is defined jointly by the plug connector body (4) and the receiving sleeve (8), and wherein at least the receiving space (9) is configured to be hollow-cylindrical,
- a sealing element (10), which sealing element (10) is configured to be annular and is arranged in the receiving space (9) defined by the plug connector body (4) and the receiving sleeve (8) and is held in a receiving groove (11) with a first groove side face (12), a second groove side face (13) and a groove base face (14) positioned in the direction of the longitudinal axis (5),
- wherein the first groove side face (12) and at least a partial section of the groove base face (14) of the receiving groove (11) are formed by the plug connector body (4),
- wherein the second groove side face (13) is formed by a first wall section (15) of the receiving sleeve (8), which first wall section (15) is an integral part of the receiving sleeve (8), and
- wherein the first wall section (15) in the region of the second groove side face (13) has an orientation directed in the direction of the longitudinal axis (5) with respect to the longitudinal axis (5) extending in the region of the receiving space (9),
- wherein the first wall section (15) is supported in contact with an end face (17) of the connector body (4),
**characterized in that** a third wall section (20) of the receiving sleeve (8) is provided, which third wall section (20) is configured to be hollow-cylindrical and is arranged at a second wall section end (21) of the first wall section (15) facing away from the longitudinal axis (5) with respect to the longitudinal axis (5) extending in the region of the receiving space (9) and is connected to said second wall section end (21), and that the third wall section (20) is arranged to project on the side facing away from the connector body (4) and ends at a first receiving sleeve end (22).

2. The plug connector (1) according to claim 1, **characterized in that** the first wall section (15) in the region of the second groove side face (13) has a perpendicular orientation with respect to the longitudinal axis (5) extending in the region of the receiving space (9).

3. The plug connector (1) according to claim 1 or 2, **characterized in that** the first groove side face (12), as seen in axial section, starting from the groove base face (14), has a conical longitudinal course with respect to the longitudinal axis (5) extending in the region of the receiving space (9), which course tapers in the direction of the second groove side face (13) and in the direction of the longitudinal axis (5).

4. The plug connector (1) according to one of the preceding claims, **characterized in that** the plug connector body (4), as seen in axial section, has a longitudinal course which decreases in size in steps, at least in sections, starting from its first end region (6) in the direction of its second end region (7).

5. The plug connector (1) according to one of the preceding claims, **characterized in that** the plug connector body (4) forms a coupling section (16, 16-1, 16-2) for the receiving sleeve (8) on the outside of its first end region (6).

6. The plug connector (1) according to one of the preceding claims, **characterized in that** the longitudinal axis (5) of the plug connector body (4) is configured to extend continuously in a straight line starting from the first end region (6) to the second end region (7) or is configured to extend in a straight line in the region of both end regions (6) and to be curved in an arcuate manner in between.

7. The plug connector (1) according to one of the preceding claims, **characterized in that** the end face (17) has a perpendicular orientation with respect to the longitudinal axis (5) extending in the region of the receiving space (9).

8. The plug connector (1) according to one of the preceding claims, **characterized in that** a second wall section (18) of the receiving sleeve (8) is provided, which second wall section (18) is arranged at a first wall section end (19) of the first wall section (15) spaced from the groove base face (14) in the direction of the longitudinal axis (5) and is connected to said first wall section end (19).

9. The plug connector (1) according to claim 8, **characterized in that** the second wall section (18) is arranged to project on the side facing away from the plug connector body (4).

10. The plug connector (1) according to claim 8 or 9, **characterized in that** the second wall section (18), as viewed in axial section, has a longitudinal course which widens conically on the side facing away from the longitudinal axis (5) with respect to the longitudinal axis (5) extending in the region of the receiving space (9).

11. The plug connector (1) according to one of the preceding claims, **characterized in that** at least a fourth wall section (24) of the receiving sleeve (8) is provided, which fourth wall section (24) is arranged with respect to the longitudinal axis (5) extending in the region of the receiving space (9) on the side of the third wall section (20) facing away from the longitudinal axis (5) in a partial section extending in parallel alignment with the latter and resting against the latter, and is connected to the first receiving sleeve end (22) of the third wall section (20) by means of a connecting wall section (23).

12. The plug connector (1) according to one of the preceding claims, **characterized in that** a coupling wall section (25) of the receiving sleeve (8) is provided, which coupling wall section (25) is arranged on the outside in contact with the first end region (6) of the plug connector body (4) and the coupling wall section (25) is held fixedly on the plug connector body (4) by means of at least one permanently formed forming section (26, 26-1, 26-2) formed therein.

13. The plug connector (1) according to claim 12, **characterized in that** the at least one forming section (26) is formed fully circumferentially over the circumference of the coupling wall section (25) and is supported in contact with an end face (27) of the coupling section (16) of the plug connector body (4) opposite the end face (17) of the plug connector body (4).

14. The plug connector (1) according to claim 12, **characterized in that** a plurality of coupling recesses (31, 31-1) distributed over the circumference are provided, and one of the forming sections (26-1, 26-2) of the coupling wall section (25) of the receiving sleeve (8) is permanently plastically deformed into each of the coupling recesses (31, 31-1).

15. The plug connector (1) according to claim 14, **characterized in that** each of the forming sections (26-2) comprises a slot-shaped opening (32) extending in the circumferential direction and a coupling tab (33) projecting into the opening (32), and that the coupling tab (33) is permanently plastically deformed into one of the coupling recesses (31-1).

16. The plug connector (1) according to claim 14 or 15, **characterized in that** an outer circumferential edge of the coupling wall section (25) is permanently plastically deformed in the direction of the longitudinal axis (5) extending in the region of the receiving space (9) in each of the deformation sections (26-2).

17. The plug connector (1) according to one of the preceding claims, **characterized in that** at least one support shoulder (29) is provided on the end face (17) of the plug connector body (4) in its first end region (6), and the third wall section (20) of the receiving sleeve (8) is supported against this support shoulder (29) with respect to the longitudinal axis (5) extending in the region of the receiving space (9) in the radial direction on the side facing away from the longitudinal axis (5).

18. The plug connector (1) according to one of the preceding claims, **characterized in that** the first wall section (15), as viewed in axial section, has an angled longitudinal course and both a further partial section of the groove base face (14-1) of the receiving groove (11) and the second groove side face (13) are formed by the first wall section (15).

19. A plug assembly (3) comprising a first female plug connector (1) and a second male plug connector (2) configured to match it, **characterized in that** the first plug connector (1) is configured according to one of the preceding claims.

## Revendications

1. Connecteur enfichable (1) pour le raccordement de conduites pour des milieux liquides et/ou gazeux avec un deuxième connecteur enfichable (2) pour la formation d'un sous-ensemble de connecteur (3), le premier connecteur enfichable (1) comprenant
- un corps de connecteur enfichable (4), ce corps de connecteur enfichable (4) présentant une forme tubulaire et étant constitué d'une matière plastique et, entre une première partie d'extrémité (6) et une deuxième partie d'extrémité (7), s'étend un axe longitudinal (5),
- un manchon de logement (8), ce manchon de logement (8) étant constitué d'un matériau métallique et étant disposé à l'extérieur dans la première partie d'extrémité (6) du corps de connecteur enfichable (4) et étant maintenu de manière fixe sur le corps de connecteur enfichable (4) et le manchon de logement (8) dépassant du corps de connecteur enfichable (4) sur le côté opposé à la deuxième partie d'extrémité (7), dans lequel un espace de logement femelle (9) est défini conjointement par le corps de connecteur enfichable (4) et le manchon de logement (8) et dans lequel au moins l'espace de logement (9) présente une forme cylindrique creuse,
- un élément d'étanchéité (10), cet élément d'étanchéité (10) présentant une forme annulaire et étant disposé dans l'espace de logement (9) défini par le corps de connecteur enfichable (4) et le manchon de logement (8) et étant maintenu positionné dans une rainure de logement (11) avec une première surface latérale de rainure (12), une deuxième surface latérale de rainure (13) et une surface de base de rainure (14) en direction de l'axe longitudinal (5),
- dans lequel la première surface latérale de rainure (12) et au moins une portion de la surface de base de rainure (14) de la rainure de logement (11) sont constituées du corps de connecteur enfichable (4),
- dans lequel la deuxième surface latérale de rainure (13) est constituée d'une première portion de paroi (15) du manchon de logement (8), cette première portion de paroi (15) faisant partie intégrante du manchon de logement (8) et
- dans lequel la première portion de paroi (15) présente, au niveau de la deuxième surface latérale de rainure (13), par rapport à l'axe longitudinal (5) s'étendant au niveau de l'espace de logement (9), une orientation dirigée vers l'axe longitudinal (5),
- dans lequel la première portion de paroi (15) s'appuie contre une surface frontale (17) du corps de connecteur enfichable (4),
**caractérisé en ce qu'**une troisième portion de paroi (20) du manchon de logement (8) est prévue, cette troisième portion de paroi (20) présentant une forme cylindrique creuse et étant disposée, par rapport à l'axe longitudinal (5) s'étendant au niveau de l'espace de logement (9), au niveau d'une extrémité de portion de paroi (21), opposée à l'axe longitudinal (5), de la première portion de paroi (15), et étant reliée avec celle-ci et **en ce que** la troisième portion de paroi (20) est disposée en saillie sur le côté opposé au corps de connecteur enfichable (4) et se termine au niveau d'une première extrémité de manchon de logement (22).

2. Connecteur enfichable (1) selon la revendication 1, **caractérisé en ce que** la première portion de paroi (15) présente, au niveau de la deuxième surface latérale de rainure (13), une orientation perpendiculaire par rapport à l'axe longitudinal (5) s'étendant au niveau de l'espace de logement (9).

3. Connecteur enfichable (1) selon la revendication 1 ou 2, **caractérisé en ce que** la première surface latérale de rainure (12) présente, vue en coupe axiale, à partir de la surface de base de rainure (14), par rapport à l'axe longitudinal (5) s'étendant au niveau de l'espace de logement (9), une extension longitudinale conique convergeant en direction de la deuxième surface latérale de rainure (13) ainsi qu'en direction de l'axe longitudinal (5).

4. Connecteur enfichable (1) selon l'une des revendications précédentes, **caractérisé en ce que** le corps de connecteur enfichable (4) présente, vu en coupe axiale, à partir de sa première partie d'extrémité (6) en direction de sa deuxième partie d'extrémité (7), au moins à certains endroits, une extension longitudinale se rétrécissant par étapes.

5. Connecteur enfichable (1) selon l'une des revendications précédentes, **caractérisé en ce que** le corps de connecteur enfichable (4) forme, au niveau de sa première partie d'extrémité (6), à l'extérieur, une portion de couplage (16, 16-1, 16-2) pour le manchon de logement (8).

6. Connecteur enfichable (1) selon l'une des revendications précédentes, **caractérisé en ce que** l'axe longitudinal (5) du corps de connecteur enfichable (4) est conçu de façon à s'étendre, dans son extension longitudinale, à partir de la première partie d'extrémité (6) jusqu'à la deuxième partie d'extrémité (7) en ligne droite de manière continue ou est conçu de façon à s'étendre, au niveau des deux parties d'extrémité (6), respectivement en ligne droite et entre les deux, de manière incurvée en forme d'arc.

7. Connecteur enfichable (1) selon l'une des revendications précédentes, **caractérisé en ce que** la surface frontale (17) présente, par rapport à l'axe longitudinal (5) s'étendant au niveau de l'espace de logement (9), une orientation perpendiculaire à celui-ci.

8. Connecteur enfichable (1) selon l'une des revendications précédentes, **caractérisé en ce qu'**une deuxième portion de paroi (18) du manchon de logement (8) est prévue, cette deuxième portion de paroi (18) étant disposée au niveau d'une première extrémité de portion de paroi (19), distante de la surface de base de rainure (14) en direction de l'axe longitudinal (5), de la première portion de paroi (15), et reliée avec celle-ci.

9. Connecteur enfichable (1) selon la revendication 8, **caractérisé en ce que** la deuxième portion de paroi (18) est disposée en saillie sur le côté opposé au corps de connecteur enfichable (4).

10. Connecteur enfichable (1) selon la revendication 8 ou 9, **caractérisé en ce que** la deuxième portion de paroi (18) présente, vue en coupe axiale, par rapport à l'axe longitudinal (5) s'étendant au niveau de l'espace de logement (9), une extension longitudinale s'élargissant de manière conique vers le côté opposé à l'axe longitudinal (5).

11. Connecteur enfichable (1) selon l'une des revendications précédentes, **caractérisé en ce qu'**au moins une quatrième portion de paroi (24) du manchon de logement (8) est prévue, cette quatrième portion de paroi (24) s'étendant, par rapport à l'axe longitudinal (5) s'étendant au niveau de l'espace de logement (9), sur le côté, opposé à l'axe longitudinal (5), de la troisième portion de paroi (20), dans une partie, dans une orientation parallèle à celle-ci et s'appuyant contre celle-ci et étant reliée au moyen d'une portion de paroi de liaison (23) avec la première extrémité de manchon de logement (22) de la troisième portion de paroi (20).

12. Connecteur enfichable (1) selon l'une des revendications précédentes, **caractérisé en ce qu'**une portion de paroi de couplage (25) du manchon de logement (8) est prévue, cette portion de paroi de couplage (25) étant disposée de façon à s'appuyer à l'extérieur contre la première partie d'extrémité (6) du corps de connecteur enfichable (4) et la portion de paroi de couplage (25) étant maintenue au moyen d'au moins une portion de déformation (26, 26-1, 26-2) déformée de manière permanente dans celle-ci, de manière fixe sur le corps de connecteur enfichable (4).

13. Connecteur enfichable (1) selon la revendication 12, **caractérisé en ce que** l'au moins une portion de déformation (26) est réalisée de façon à entourer entièrement la circonférence de la portion de paroi de couplage (25) et s'appuie contre une surface frontale (27) de la portion de couplage (16), opposée à la surface frontale (17) du corps de connecteur enfichable (4), du corps de connecteur enfichable (4).

14. Connecteur enfichable (1) selon la revendication 12, **caractérisé en ce que** plusieurs renfoncements de couplage (31, 31-1), répartis sur la circonférence, sont prévus, et dans chacun des renfoncements de couplage (31, 31-1), respectivement une des portions de déformation (26-1, 26-2) de la portion de paroi de couplage (25) du manchon de logement (8) est déformée de manière plastique et permanente vers l'intérieur.

15. Connecteur enfichable (1) selon la revendication 14, **caractérisé en ce que** chacune des portions de déformation (26-2) comprend un perçage en forme de fente (32), s'étendant dans la direction de la circonférence, et une patte de couplage (33) dépassant à l'intérieur du perçage (32) et **en ce que** la patte de couplage (33) est déformée de manière plastique et permanente vers l'intérieur dans un des renfoncements de couplage (31-1).

16. Connecteur enfichable (1) selon la revendication 14 ou 15, **caractérisé en ce qu'**un bord périphérique externe de la portion de paroi de couplage (25) est déformé de manière plastique et permanente au niveau de chacune des portions de déformation (26-2) par rapport à l'axe longitudinal (5) s'étendant au niveau de l'espace de logement (9), en direction de celui-ci.

17. Connecteur enfichable (1) selon l'une des revendications précédentes, **caractérisé en ce qu'**au moins un épaulement d'appui (29) est prévu sur la surface frontale (17) du corps de connecteur enfichable (4) dans sa première partie d'extrémité (6) et, sur cet épaulement d'appui (29), la troisième portion de paroi (20) du manchon de logement (8) s'appuie, par rapport à l'axe longitudinal (5) s'étendant au niveau de l'espace de logement (9), dans une direction radiale vers le côté opposé à l'axe longitudinal (5).

18. Connecteur enfichable (1) selon l'une des revendications précédentes, **caractérisé en ce que** la première portion de paroi (15) présente, vue en coupe axiale, une extension longitudinale inclinée et une autre partie de la surface de base de rainure (14-1) de la rainure de logement (11) ainsi que la deuxième surface latérale de rainure (13) sont constituées de la première portion de paroi (15).

19. Sous-ensemble de connecteur (3) comprenant un premier connecteur enfichable femelle (1) et un deuxième connecteur enfichable mâle (2), réalisé de manière adaptée à celui-ci, **caractérisé en ce que** le premier connecteur enfichable (1) est conçu selon l'une des revendications précédentes.
